# EUROPEAN PATENT APPLICATION

(11) **EP 4 219 196 A1**
(43) Date of publication of application: **02.08.2023**
(21) Application number: 23153778.8
(22) Date of filing: 27.01.2023
(51) Int. Cl.: B60G 3/20

(54) **AGRICULTURAL VEHICLE WITH INDEPENDENT SUSPENSIONS**

(30) Priority: 01.02.2022 IT 202200001643
(71) Applicant: CNH Industrial Italia S.p.A., 10156 Torino (IT)
(72) Inventor: HUBER, Roland, 4300 St. Valentin (AT); KOECK, Reinhard, 4300 St. Valentin (AT)
(74) Representative: CNH Industrial IP Department

(57) **Abstract**

Agricultural vehicle comprising a wheel axle (WA) comprising two opposite hubs (HB) connected to central body (CB), which is part of a frame of the agricultural vehicle, each hub being connected to the central body through two arms (UA, LA) defining a wishbone suitable to oscillate according to an operative vertical direction (VD), wherein the two arms include an upper arm (UL) having a first end hinged in an upper portion of the central body defining a first hinge (H1) and a second end, opposite to the first one, hinged in an upper portion of the hub (HB), defining a second hinge (H2) and a lower arm (LA) having a first end hinged in a lower portion of the central body defining a third hinge (H3) and a second end, opposite to the first one, hinged in a lower portion of the hub (HB), defining a fourth hinge (H4) .

## Description

### Field of the invention

The present invention relates to the field of the suspensions for agricultural vehicles.

### Description of the prior art

It is well known that agricultural vehicle are provided of suspensions with high robustness due to the heavy tasks that they have to face.

In certain circumstances, it is absolutely relevant to reduce the height of the suspension in order to preserve the highest possible volume for the payload.

However, the reduction of the height of the suspensions impacts on the robustness thereof.

### Summary of the invention

The main object of the present invention to provide an agricultural vehicle provided of a suspension with limited height and at the same time high robustness.

The main principle of the invention is the implementation of a central body and two hubs arranged on opposite sides of the central body. Each hub is connected to the central body through two arms defining a wishbone suitable to oscillate according to an operative vertical direction.

In a medial portion of the upper arm a reversing lever is hinged. The reversing lever is schematized as a triangle having one first vertex hinged on a medial portion of the upper arm, a second vertex hinged with a first end of a push-rod, while the second end of the push-rod is hinged in a medial portion of the lower arm. A third vertex of the triangle is hinged to an end of a hydraulic actuator having one first end hinged in the third vertex of the triangle and a second end, opposite to the first end, hinged on the central body.

Preferably, the second end of the actuator is hinged in the same hinge of the upper arm.

An extension of the actuator forces the reversing lever to rotate over the first vertex pushing the push-road against the lower arm such that to achieve the configuration with the largest distance between the upper and lower arm.

The upper and lower arms are hinged to the central body such that the largest distance between each another is achieved with the lowering of the hub with respect to the central body. In other words, when the actuator pushes the reversing lever the distance of the central body is raised from the ground.

The distance between the hinging points of the upper and lower arms on the central body is preferably equal or less than the diameter of the hubs, therefore, the suspension has a reduced height and a strong robustness and particularly suitable for reaching the aims of an agricultural vehicle.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Figures 1 and 2 show two opposite configurations of the same suspension according to the present invention;
- Figure 3a and 3b disclose, starting from figure 2, two sets of components defining the suspension of the present invention;
- Figure 4 discloses a prospective view of an axel according to the present invention.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

Figures disclose a so-called central body CB, which is part of the frame of the agricultural vehicle.

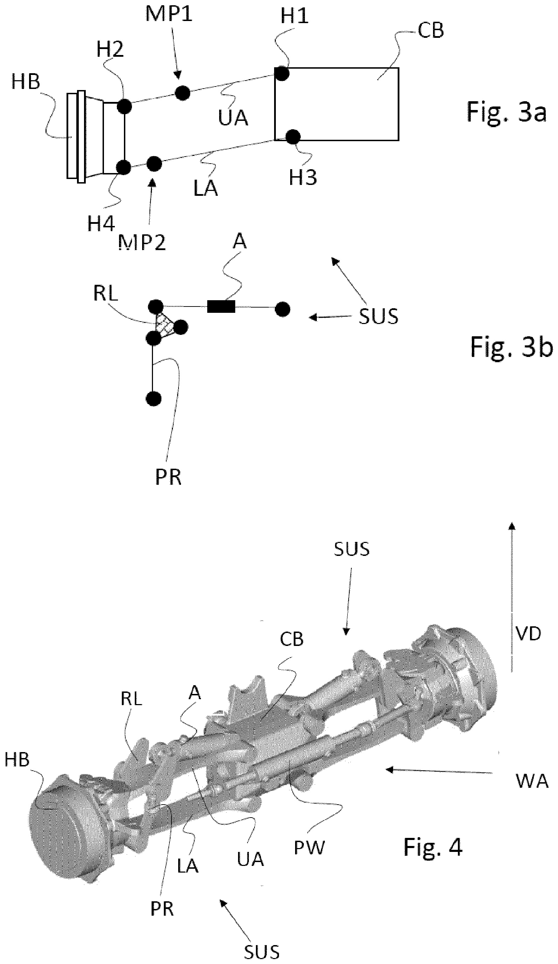

To the central body two hubs HB are connected to corresponding suspensions SUS. Each hub is suitable to be connected to a wheel and is connected to the central body through two arms UA, LA defining a wishbone suitable to oscillate according to an operative vertical direction VD. Figure 3a discloses the wishbone without the components suitable to vary the geometry of the suspension. Such components, suitable to vary the suspension geometry, are disclosed, separately, on figure 3b for a clear understanding of the invention.

It should be understood that, for convenience, only one of the two hubs of the same axle is disclosed and the corresponding suspension is disclosed.

The upper arm UL has a first end hinged in an upper portion of the central body defining a first hinge H1 and a second end, opposite to the first one, hinged in an upper portion of the hub HB, defining a second hinge H2.

The lower arm LA has a first end hinged in a lower portion of the central body defining a third hinge H3 and a second end, opposite to the first one, hinged in a lower portion of the hub HB, defining a fourth hinge H4.

Upper and lower are referred to an operative condition of the axle connected to a vehicle arranged on a horizontal plane, as understood by the skilled person in the art.

In a medial portion MP1 (see figure 3a) of the upper arm UA, a reversing lever RL is hinged.

The reversing lever RL has a shape, substantially, of a triangle, at least by a kinematic point of view.

The reversing lever has one first vertex H6 hinged on a medial portion MP1 of the upper arm UA, a second vertex H7 hinged with a first end of a push-rod PR, while the second end of the push-rod is hinged in a medial portion MP2 (see figure 3a) of the lower arm LA. A third vertex H8 of the triangle RL is hinged to an end of a hydraulic actuator A having one first end hinged in the third vertex H8 of the triangle and a second end, opposite to the first end, hinged on the central body.

Preferably, the second end of the actuator A is hinged in the same first hinge H1 of the upper arm.

It is clear that the vertices of the reversing lever are "confused" with the corresponding hinges for a clearer understanding of the invention.

An extension of the actuator forces the reversing lever to rotate over the first vertex H6 pushing the push-road against the lower arm such that to achieve the "raised" configuration with the largest distance between the upper and lower arms.

The upper and lower arms are hinged to the central body such that the largest distance between each another is achieved with the lowering of the hub with respect to the central body. In other words, when the actuator pushes the reversing lever the distance of the central body is raised from the ground.

The distance between the hinges H1, H3 respectively of the upper and lower arms on the central body is preferably equal or less than the distance between respectively the hinges H2 and H4 on the hub, therefore, the suspension has a reduced height and a strong robustness and particularly suitable for reaching the aims of an agricultural vehicle.

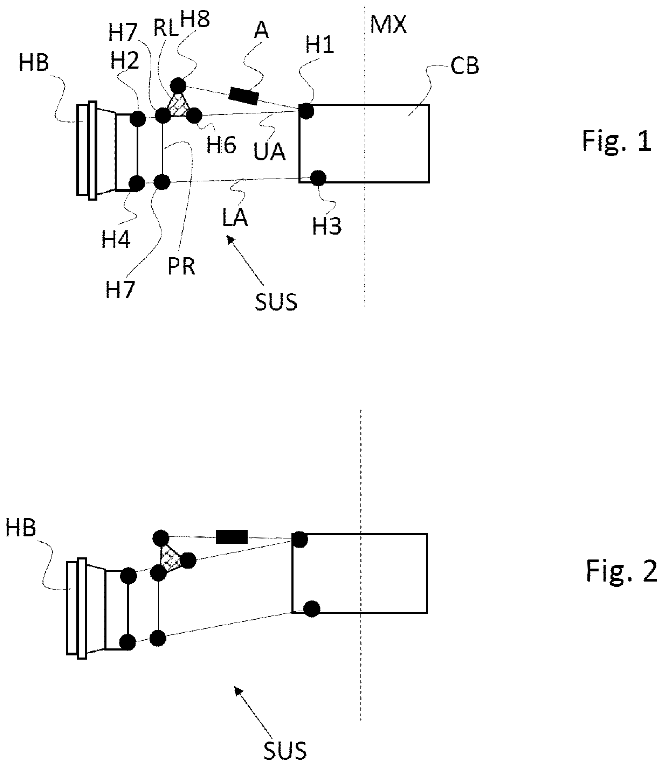

In lowered condition of the suspension, as in figure 1, the upper and lower arms are substantially horizontal.

The lower arm is hinged to the central body in a point H3, which is closer to the medial axis MX of the wheel axle WA, with respect to the first hinge H1. This implies that the lower arm has a length slightly greater than the upper arm. The rising of the suspension, disclosed in figure 2, is then proportional to the distance variation between the first hinge H1 and the third hinge H3 from the medial axis MX.

Figure 3b discloses the components implemented to manage the geometry of the suspension, such as the actuator A, the reversing lever RL and the push rod PR.

Figure 4 discloses a 3D view of an axle according to the present invention. Both the hubs HB are disclosed with the left and right suspension.

In addition, the axle is provided of a power steering wheel PW, which permits to control the rotation of the hubs in a per se known way.

Figure 4 discloses that the upper and lower arms, considering a longitudinal development of the vehicle to which the axle is designed to be connected, have a relevant thickness along said longitudinal development. In addition, each suspension is provided of a couple of reversing levers and push rods, arranged in symmetrical fashion with respect to the upper and lower arms, in order to better distribute the raising force developed by the actuator A.

The actuator is preferably hydraulic, nevertheless, also different solution can be implemented.

The actuator can be provided of an axial dumper or can be itself conceived to dump axial strengths as a consequence of the roughness of the ground.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Agricultural vehicle comprising a wheel axle (WA) comprising two opposite hubs (HB) connected to central body (CB), as part of a frame of the agricultural vehicle, each hub being connected to the central body through a suspension (SUS), wherein the suspension includes
- two arms (UA, LA) defining a wishbone suitable to oscillate according to an operative vertical direction (VD), wherein the two arms include
+ an upper arm (UL) having a first end hinged in an upper portion of the central body defining a first hinge (H1) and a second end, opposite to the first one, hinged in an upper portion of the hub (HB), defining a second hinge (H2) and
+ a lower arm (LA) having a first end hinged in a lower portion of the central body defining a third hinge (H3) and a second end, opposite to the first one, hinged in a lower portion of the hub (HB), defining a fourth hinge (H4);
- a reversing lever (RL), having a substantial triangular shape, with a first vertex (H6) hinged to a medial portion (MP1) of the upper arm (UA) a second vertex (H7) hinged with a first end of a push-rod (PR), while the second end of the push-rod is hinged in a medial portion (MP2) of the lower arm (LA) and a third vertex (H8) hinged to a first end of
- a hydraulic actuator (A), wherein the hydraulic actuator has a second end, opposite to the first end, hinged on the central body.

2. Vehicle according to claim 1, wherein the second end of the actuator (A) is hinged in the same first hinge (H1).

3. Vehicle according to claim 1 or 2, wherein an extension of the actuator forces the reversing lever to rotate over the first vertex (H6) pushing the push-road against the lower arm such that to achieve a configuration with a largest distance between the upper and lower arms.

4. Vehicle according to claim 3, wherein said configuration identifies a raised condition of central body is raised from the ground.

5. Vehicle according to any one of the previous claims, wherein a first distance between the hinges (H1, H3) respectively of the upper and lower arms on the central body (CB) is preferably equal or less than a second distance between respectively the hinges (H2, H4) on the hub (HB).

6. Vehicle according to any one of the previous claims, wherein the lower arm is hinged to the central body in a hinge (H3), which is closer to a medial axis (MX) of the wheel axle with respect to the first hinge (H1).

7. Vehicle according to any one of the previous claims, wherein the lower arm has a length slightly greater than the upper arm.

8. Vehicle according to any one of the previous claims, further comprising a power steering wheel (PW) arranged to impart a left/right rotation of the hubs.

9. Vehicle according to any one of the previous claims wherein each wishbone is provided of a couple of reversing levers and push rods, arranged in symmetrical fashion with respect to the upper and lower arms.

10. Vehicle according to any one of the previous claims, wherein the actuator (A) is provided of an axial dumper or is conceived to dump axial strengths.
